# EUROPÄISCHE PATENTANMELDUNG

(11) **EP 1 512 614 A1**
(43) Veröffentlichungstag der Anmeldung: **09.03.2005**
(21) Anmeldenummer: 03019940.0
(22) Anmeldetag: 02.09.2003
(51) Int. Cl.: B62D 25/14, F16J 15/10, B29C 45/14

(54) **Dichtflansch**

(71) Anmelder: Frape Behr S.A., 08040 Barcelona (ES)
(72) Erfinder: Blasco, José Cremades, 08902 L'Hospitalet (BCN) (ES); Homdedeu, Jorge Guzman, 08004 Barcelona (ES); Vivanco, Inaki, 08301 Mataro (ES)
(74) Vertreter: Grauel, Andreas, Dr.

(57) **Zusammenfassung**

Die vorliegende Erfindung betrifft einen Dichtflansch.

Ein Dichtflansch (10) dient der Durchführung wenigstens einer Anschlusseinrichtung durch einen Karosseriedurchbruch in einem Karosseriebereich wie einer Spritzwand. Der Dichtflansch ist in einem Mehrkomponentenspritzgussverfahren hergestellt und weist einen eigensteifen Grundkörper (11) und zumindest einen flexiblen Dichtungsabschnitt (12,13) auf. Der Dichtungsabschnitt (12,13) ist am Grundkörper einstückig angeformt. Gemäß der Erfindung weist der Grundkörper zumindest eine Durchführöffnung (14a) auf, in die eine Blende (20) einsetzbar ist.

## Beschreibung

Die vorliegende Erfindung betrifft einen Dichtflansch, wie er beispielsweise aus der DE 199 30 900 Al bekannt ist. Ein derartiger Dichtflansch dient der Durchführung wenigstens einer Anschlusseinrichtung durch einen Karosseriedurchbruch in einem Karosseriebereich eines Fahrzeuges, beispielsweise einer Spritzwand. In diesem Bereich werden Anschlusseinrichtungen wie beispielsweise Leitungen von Bauelementen für das Beheizen und Klimatisieren des Fahrzeuginnenraumes aus dem Motorraum im diesen hineingeführt. Dabei ist es aus der DE 199 30 900 A 1 bekannt, den Dichtflansch im Mehrkomponentenspritzgussverfahren herzustellen. Er weist dann einen eigensteifen Grundkörper und zumindest einen flexiblen Dichtungsabschnitt auf, der am Grundkörper einstückig angeformt ist.

Der Dichtungsabschnitt dient beispielsweise zur dichten Anlage des Dichtflansches an der Befestigungsstelle im Bereich des Karosseriedurchbruchs. Darüber hinaus kann auch ein flexibler Dichtungsabschnitt vorgesehen sein, der der Durchführung von Anschlusseinrichtungen dient, wobei diese Durchführung auch fluiddicht ausgeführt sein. Der Dichtungsabschnitt hat dann einerseits die Funktion eines dichtenden Abschlusses und andererseits einer geräuscharmen, schwingungsdämpfenden Durchführung von Anschlusseinrichtungen.

Bei den Anschlusseinrichtungen kann es sich insbesondere um Leitungen handeln, die dem Verbinden eines im Motorraum angeordneten, meist fahrtluftdurchströmten Kühlelements mit einer im Inneren des Fahrzeugs angeordneten Funktionseinheit, beispielsweise einer Heizungsanlage oder einer Klimaanlage, oder auch einem Klimagerät, dient.

Ein Nachteil eines solchen, im Zweikompomentenspritzgussverfahren hergestellten Bauteils ist, dass dieses speziell an eine Konfiguration des Fahrzeugs, beispielsweise die Anzahl von Leitungen und deren Positionierung angepasst ist. Werden derartige Bauteile für Fahrzeuge mit unterschiedlichen Ausstattungen verwendet, so muss für jede dieser unterschiedlichen Ausstattungen ein entsprechendes Bauteil hergestellt werden. Dies erhöht die im Rahmen einer Fahrzeugbaureihe benötigte Teilevielfalt und ist aus diesem Grund nachteilig.

Aufgabe der Erfindung ist es daher, eine möglichst einfache Anpassung des Dichtflansches an unterschiedliche Fahrzeugkonfigurationen zu ermöglichen.

Die der Erfindung zugrunde liegende Aufgabe wird entsprechend der vorliegenden Erfindung durch einen Dichtflansch gemäß dem Anspruch 1 gelöst.

Ein Dichtflansch dient der Durchführung wenigstens einer Anschlusseinrichtung durch einen Karosseriedurchbruch in einem Karosseriebereich wie einer Spritzwand. Der Dichtflansch ist in einem Mehrkomponentenspritzgussverfahren hergestellt und weist einen eigensteifen Grundkörper und zumindest einen flexiblen Dichtungsabschnitt auf. Der Dichtungsabschnitt ist am Grundkörper einstückig angeformt. Gemäß der Erfindung weist der Grundkörper zumindest eine Durchführöffnung auf, in die eine Blende einsetzbar ist.

Dadurch, dass gemäß der Erfindung eine Durchführöffnung vorhanden ist, in welche eine Blende einsetzbar ist, kann durch unterschiedliche Gestaltung der Blende in verschiedener Weise auf die Anforderungen unterschiedlicher Fahrzeugkonfigurationen reagiert werden. In einen gemeinsamen Grundkörper können unterschiedlich gestaltete Blenden eingesetzt werden. Dabei können die Blenden beispielsweise schon vormontiert auf den durch die Durchführöffnung durchzuführenden Leitungen montiert sein und bei der Montage automatisch in die Durchführöffnung eingesetzt werden. Hiermit wird der Dichtflansch flexibel an unterschiedliche Konfigurationen anpassbar, indem jeweils angepasste Blenden eingesetzt werden. Gleichzeitig bleibt ein einheitliches Grundbauteil erhalten. Durch unterschiedliche Ausgestaltung der Blende können vielfältigste Konfigurationen realisiert werden.

Es entspricht einer vorteilhaften Ausgestaltung der Erfindung, wenn ein am Grundkörper einstückig angeformter Dichtungsabschnitt ein in Montagelage im Bereich des Karosseriedurchbruchs anliegender Dichtungsabschnitt ist. Durch diese Maßnahme wird es in vorteilhafter Weise ermöglicht, den Dichtflansch einfach zu montieren. Die dichtende Anlage des Dichtflansches am Karosseriedurchbruch wird erreicht, ohne dass die zusätzliche Montage und Ausrichtung eines Dichtmittels erforderlich ist. Das Ausbilden der Dichtung am Dichtflansch in einstückiger Bauform wird insbesondere dadurch ermöglicht, dass der Dichtflansch im Mehrkomponentenspritzgussverfahren hergestellt wird, so dass unterschiedliche Materialien einstückig miteinander verbunden sind.

Es entspricht einer weiteren vorteilhaften Ausgestaltung der Erfindung, wenn ein am Grundkörper einstückig angeformter Dichtungsabschnitt als Weichbereich ausgebildet ist, welcher wenigstens eine Durchführöffnung zum Durchführen einer Anschlusseinrichtung aufweist. Diese kann insbesondere derart ausgebildet sein, dass sie dichtend an den Anschlusseinrichtungen anliegt. Durch'diese Maßnahme wird eine fluiddichte Durchführung von Anschlusseinrichtungen, wie beispielsweise Leitungen durch den Dichtflansch hindurch ermöglicht. Gleichzeitig wird durch die Verwendung von Weichmaterial und dessen elastischen Eigenschaften eine geräuschdämpfende und Kontaktgeräusche vermeidende Durchführung erreicht. Auch können Schwingungen der Anschlusseinrichtungen, die im Fahrzeugbetrieb angeregt werden, gedämpft werden, so dass die Schwingungsübertragung auf den Dichtflansch und damit auch auf den Karosseriekörper vermieden werden, so dass auch hier in vorteilhafter Weise eine Geräuschentwicklung vermieden oder vermindert wird. Als Weichmaterial zur Herstellung des Weichbereichs kommen insbesondere elastisch verformbare Kunststoffe in Frage.

Gemäß einer bevorzugten Ausgestaltung der Erfindung weist die Durchführöffnung einen Rand auf, der von dem Grundkörper abragt. Dieser Rand bildet dabei insbesondere einen durch Rastmittel übergreifbaren Wulst. Das Ausbilden eines Randes, der die Durchführöffnung begrenzt, bildet zum einen eine Dichtfläche für die in die Durchführöffnung einsetzbare Blende und kann andererseits der sicheren Befestigung der Blende in der Durchführöffnung dienen. Das Befestigen der Blende am Grundkörper kann insbesondere über diesen Rand erfolgen, wobei die Befestigung gemäß vorteilhaften Ausgestaltungen der Erfindung durch Verrasten, formschlüssige Anlage und/oder kraftschlüssige Anlage der Blende am Grundkörper erfolgen.

Gemäß vorteilhafter Ausgestaltung der Erfindung ist die Blende austauschbar am Grundkörper gehalten, so dass beispielsweise die Blende bei einem weiteren Nachrüsten des Fahrzeuges und dem dabei erforderlichen Durchführen weiterer Anschlusseinrichtungen durch den Karosseriedurchbruch ausgetauscht werden kann, ohne dass der Dichtflansch an sich ersetzt oder ausgewechselt werden muss. Die Blende verschließt gemäß vorteilhafter Ausgestaltung die Durchführöffnung vollständig. Sie kann wenigstens eine Durchführöffnung zum Durchführen einer Anschlusseinrichtung aufweisen, die insbesondere dichtend an der Anschlusseinrichtung anliegt. Auch die Blende selbst kann aus eigensteifem Material oder aus weichem Material oder einer Kombination daraus hergestellt sein, wobei das Weichmaterial wiederum den Vorteil einer schwingungsdämpfenden Durchführung von Anschlusseinrichtungen bei gleichzeitiger fluiddichter Durchführung ermöglicht.

Ausgestaltungen der Erfindung können auch den Unteransprüchen entnommen werden. Im Übrigen ist die Erfindung anhand des in der Zeichnung dargestellten Ausführungsbeispiels näher erläutert. Dabei zeigt:
- Fig. 1: einen erfindungsgemäßen Dichtflansch; und
- Fig. 2: eine Blende für einen erfindungsgemäßen Dichtflansch.

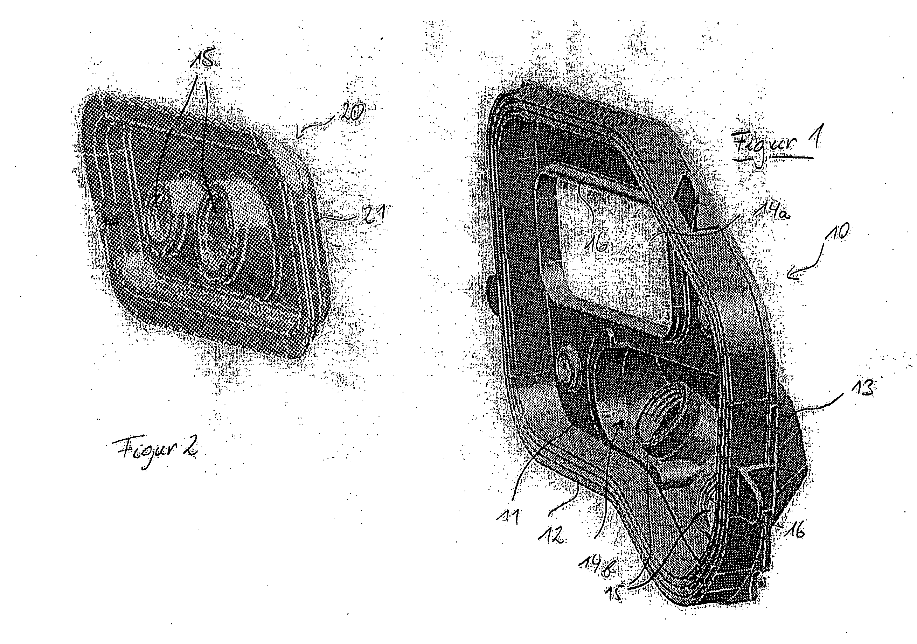

Die Fig. 1 zeigt einen Dichtflansch 10, der zum Abdecken eines Durchbruchs im Bereich der Spritzwand eines Fahrzeugs ausgebildet ist. Der Dichtflansch 10 besteht aus einem Grundkörper 11 und daran im Mehrkomponentenspritzgussverfahren angeformten Dichtungsabschnitten 12 und 13. Der Grundkörper ist eine eigensteif ausgebildete Platte, beispielsweise aus einem Kunststoffmaterial. Die Dichtungsabschnitte 12 und 13 sind an diesem Grundkörper einstückig angeformt. Der Dichtungsabschnitt 12 ist dabei ein der Kontur des Grundkörpers folgender Dichtungsabschnitt, der in Montagelage an dem Karosserieblech anliegt, dessen Karosseriedurchbruch durch den Dichtflansch 10 dichtend abgedeckt wird. Der Dichtungsabschnitt 12 ist aus einem Kunststoffmaterial, insbesondere einem gummiartigen Weichmaterial, gebildet und deckt eine im Grundkörper ausgebildete Durchführöffnung 14b zum Durchführen von Anschlusseinrichtungen, wie beispielsweise von und zum Heizungswärmetauscher des Motorkühlwasserkreislaufes führenden Versorgungsleitungen einer Fahrzeugheizung, ab. Der Dichtungsabschnitt ist ein Formkörper. Er weist zwei Durchführungen 15 auf, wobei die Durchführungen dichtend an den entsprechenden Anschlusseinrichtungen anliegen. Hierzu sind Rippen 16 an der den Anschlusseinrichtungen zugewandten Innenseiten der Durchführungen 15 ausgebildet. Hierdurch wird eine besonders dichtende Anlage an den Anschlusseinrichtungen gewährleistet. Darüber hinaus stellt der Dichtungsabschnitt, der aus einem elastisch verformbaren Weichmaterial gebildet wird, ein gutes Dämpfungselement dar.

Dadurch, dass das elastische Material mit einer ausreichenden Dämpfung schwingt,' wird zum einen verhindert, dass Schwingungen von den Anschlusseinrichtungen auf den Grundkörper übertragen werden und dieser dann selbstschwingend als Membran wirkt und den Körperschall verstärkt. Eine ausreichende Schwingungsdämpfung ist darüber hinaus gegeben. Zugleich wird dadurch, dass die Anschlusseinrichtungen in den Durchführungen gehalten sind, verhindert, dass diese gegeneinander schlagen und so selbst Schall erzeugen.

Der Dichtflansch 10 weist eine weitere Durchführöffnung 14a auf, die nicht von einem einstückig angeformten Dichtungsabschnitt verschlossen wird. Vielmehr weist diese Durchführöffnung 14a einen sie begrenzenden Rand 16 auf, der rechtwinklig von dem Grundkörper 11 abragt. Der Rand 11 dient der Befestigung einer Blende 20, die beispielsweise in der Fig. 2 dargestellt ist.

Die in der Fig. 2 dargestellte Blende 20 besteht aus einem Weichmaterial. Die Blende 20 ist dabei in ihrer Größe so angepasst, dass sie die Durchführöffnung 14a vollflächig dichtend abdeckt, wobei ein Halteabschnitt 21 den Rand 16 des Dichtflansches 10 beidseitig umgreift. Der Halteabschnitt 21 kann dabei insbesondere U-förmig ausgebildet sein, wobei die Schenkel des U geringfügig weniger voneinander beabstandet sind, als die Materialstärke des Randes 16 ausgeführt ist und so eine kraft-, form- und reibschlüssige Anlage des Halteabschnitts 21 am Rand 16 bilden. Es kann auch eine Verrippung oder Verrastung mit einer Rastnase ausgebildet sein, die eine entsprechende Auskragung der Vertiefung hintergreift, wobei die Rastnase insbesondere am Halteabschnitt 21 ausgebildet ist. Auch die Blende 20 weist zwei Durchführungen 15 auf, durch die Anschlusseinrichtungen wie beispielsweise die zum Kondensator einer Klimaanlage führenden Leitungen hindurchgeführt sein können. Die Durchführungen liegen dabei möglichst dichtend an den Anschlusseinrichtungen an und halten diese. Dadurch, dass die Blende 20 ebenfalls aus Weichmaterial hergestellt ist, können auch in der Blende Anschlusseinrichtungen so gehalten sein, dass die Schwingungen gedämpft werden, das Entstehen von Schallquellen vermieden wird und eine Weiterleitung von Schwingungen an den Dichtflansch unterbunden wird.

Anstelle einer flexibel ausgebildeten Blende kann die Blende 21 auch aus einem eigensteifen Material bestehen. Insbesondere kann die Blende auch als ein die Durchführöffnung ohne weitere Durchführungen vollständig abschließender, vorzugsweise eigensteifer Deckel ausgebildet sein. Der Deckel schließt die Durchführöffnung 14a dann aber, wenn durch diese keine Anschlusseinrichtungen hindurchgeführt werden.

## Patentansprüche

1. Dichtflansch für die Durchführung von wenigstens einer Anschlusseinrichtung durch einen Karosseriedurchbruch in einem Karosseriebereich, wie einer Spritzwand, wobei der Dichtflansch im Mehrkomponentenspritzgussverfahren hergestellt ist und einen eigensteifen Grundkörper und zumindest einen flexiblen Dichtungsabschnitt aufweist, der am Grundkörper einstückig angeformt ist,
**dadurch gekennzeichnet,**
**dass** der Grundkörper (11) zumindest eine Durchführöffnung (14a, 14b) aufweist, in die eine Blende (20) einsetzbar ist.

2. Dichtflansch nach Anspruch 1,
**dadurch gekennzeichnet,**
**dass** ein am Grundkörper (11) einstückig angeformter Dichtungsabschnitt (12) ein in Montagelage im Bereich des Karosseriedurchbruchs anliegender Dichtungsabschnitt ist.

3. Dichtflansch nach Anspruch 1 oder 2,
**dadurch gekennzeichnet,**
**dass** ein am Grundkörper (11) einstückig angeformter Dichtungsabschnitt (12) als Weichbereich ausgebildet ist, welcher vorzugsweise wenigstens eine Durchführung (15) zum Durchführen einer Anschlusseinrichtung aufweist, welche insbesondere derart ausgebildet ist, dass sie dichtend an die Anschlusseinrichtung anliegt.

4. Dichtflansch nach einem der Ansprüche 1 bis 3,
**dadurch gekennzeichnet,**
**dass** die Durchführöffnung (14a) einen Rand aufweist, der von dem Grundkörper (11) abragt, wobei der Rand (16) insbesondere einen durch Rastmittel übergreifbaren Wulst aufweist.

5. Dichtflansch nach einem der vorangegangenen Ansprüche,
**dadurch gekennzeichnet,**
**dass** die Blende (20) durch Verrasten am Grundkörper befestigbar ist.

6. Dichtflansch nach einem der Ansprüche 1 bis 4,
**dadurch gekennzeichnet,**
**dass** die Blende (12) durch formschlüssige Anlage am Grundkörper befestigbar ist.

7. Dichtflansch nach einem der Ansprüche 1 bis 6,
**dadurch gekennzeichnet**
**dass** die Blende (12) durch kraftschlüssige Anlage am Grundkörper befestigbar ist.

8. Dichtflansch nach einem der vorhergehenden Ansprüche,
**dadurch gekennzeichnet,**
**dass** die Blende (12) austauschbar ist.

9. Dichtflansch nach einem der vorhergehenden Ansprüche,
**dadurch gekennzeichnet**
**dass** die Blende (20) die Durchführöffnung (14a) vollständig verschließt.

10. Dichtflansch nach einem der Ansprüche 1 bis 8,
**dadurch gekennzeichnet**
**dass** die Blende wenigstens eine Durchführung (15) zum Durchführen einer Anschlusseinrichtung aufweist, die insbesondere dichtend an der Anschlusseinrichtung anliegt.

11. Dichtflansch nach einem der vorhergehenden Ansprüche,
**dadurch gekennzeichnet,**
**dass** die Blende (20) als eigensteifes Bauteil ausgeführt ist.

12. Dichtflansch nach einer Ansprüche 1 bis 11,
**dadurch gekennzeichnet**
**dass** die Blende (20) aus einem Weichmaterial besteht.
